# EUROPÄISCHE PATENTANMELDUNG

(11) **EP 3 415 848 A1**
(43) Veröffentlichungstag der Anmeldung: **19.12.2018**
(21) Anmeldenummer: 18177519.8
(22) Anmeldetag: 13.06.2018
(51) Int. Cl.: F25D 23/06

(54) **Vakuumdämmkörper**

(30) Priorität: 13.06.2017 DE 102017005582; 30.08.2017 DE 102017119920
(71) Anmelder: Liebherr-Hausgeräte Lienz GmbH, 9900 Lienz (AT)
(72) Erfinder: Gruidl, Thomas, 9781 Obertrauburg (AT); Gillen, Sarah, 9991 Dölsach (AT); Trojer, Martin, 9900 Lienz (AT)
(74) Vertreter: Herrmann, Uwe

(57) **Zusammenfassung**

Die vorliegende Erfindung betrifft einen Vakuumdämmkörper umfassend einen Kern und eine den Kern umgebende Umhüllung, wobei der Kern als eigenstabiles Gebilde ausgeführt ist und wobei die Umhüllung als Barrierebeschichtung ausgeführt ist, die auf den Kern durch ein Auftragsverfahren aufgebracht ist, wobei in dem von der Barrierebeschichtung umgebenen Raum Vakuum herrscht.

## Beschreibung

Die vorliegende Erfindung betrifft einen Vakuumdämmkörper sowie ein temperierten Behälter, insbesondere ein Kühl- und/oder Gefriergerät mit einem derartigen Vakuumdämmkörper und des Weiteren ein Verfahren zur Herstellung eines derartigen Vakuumdämmkörpers.

Aus dem Stand der Technik bekannte Kühl- und/oder Gefriergeräte weisen im Allgemeinen einen Innenbehälter, der den gekühlten Raum umgibt, sowie ein Außengehäuse auf, wobei der Raum zwischen dem Innenbehälter und dem Außengehäuse üblicherweise durch PU-Schaum gefüllt ist.

Aufgrund der zunehmenden Anforderungen zur Verringerung des Energieverbrauchs werden effizientere Wärmedämmkonzepte gefordert. Um diesen Anforderungen gerecht zu werden, werden Vakuumisolationspaneele (im Folgenden VIPs) eingesetzt, die beispielweise zwischen dem Innenbehälter und dem Außengehäuse eingesetzt werden oder auch zwischen der Innen- und Außenseite einer Tür oder eines sonstigen Verschlusselementes. VIPs weisen sehr gute wärmedämmende Eigenschaften auf, sie können direkt als Wände verwendet werden oder auch - wie oben ausgeführt - in den Raum zwischen Innenbehälter bzw. Innenwand und Außenwand eingesetzt werden. Ein Nachteil beim Einsatz von VIPs sind die vergleichsweise hohen Fertigungskosten sowie Übergänge, die eine hohe Wärmeleitung aufweisen, was mit Energieverlusten einhergeht.

Zur Herstellung eines VIP wird in einem Beutel aus Barrierefolie ein Pulver oder ein Festkörper eingefüllt und in die gewünschte Form gebracht. Der Innenraum wird evakuiert und der Beutel wird im evakuierten Zustand verschlossen bzw. versiegelt. Die Herstellprozesse von VIPs und der Folienumhüllung bedingen einen relativ hohen Aufwand und lassen sich nur schwer vollständig automatisieren. Beim Evakuieren des einteiligen oder mehrteiligen flächigen Kerns im VIP führt der Luftdruck der Umgebungsatmosphäre mitunter dazu, dass die Umhüllung in den Kern ungleichmäßig hineingedrückt wird, was wellige Oberflächen zur Folge hat.

Im Kern von VIPs befinden sich druckbelastbare Materialien in Form von Pulverplatten, Pulverschüttungen, offenporigen Schäumen oder Glasfasermaterialien. Als Kernmaterialien kommen beispielsweise Perlit, pyrogene Kieselsäure oder Glasfaser in Betracht. Kernplatten aus diesen Materialien weisen eine sehr feine Porenstruktur auf und lassen relativ hohe Gasdrücke zu, ohne dass die Wärmeleitfähigkeit des Restgases eine signifikante Rolle spielt.

VIPs werden mit speziellen Barrierefolien umhüllt, die meist aus mehreren Schichten bestehen. Die Barriere-Funktion gegen den Durchtritt von Gasen kann z.B. mithilfe von Aluminiumverbundfolien sichergestellt werden. Die Barrierefolien stellen sicher, dass das Gasdruck im Kernmaterial und damit auch die Wärmeleitfähigkeit des Vakuumpaneels nur geringfügig ansteigt. Die Barrierefolien stellen zwar eine wirksame Barriere gegen den Gasdurchtritt dar, aufgrund der geringen Dicke der Barrierefolie sind die VIPs in der Handhabung und Herstellung sehr empfindlich und aufwändig. Als weiterer Nachteil ist zu nennen, dass an den Siegelschichten, an denen der Beutel aus Barrierefolie versiegelt ist, eine relativ hohe Gasdurchlässigkeit besteht, die einen negativen Einfluss auf die Lebensdauer der VIPs hat, weil deren Wirksamkeit mit einem ansteigen Gasdruck im Inneren der VIPs abnimmt.

Als weitere Lösungsmöglichkeit kommen doppelwandige Gehäuse in Betracht, die gefüllt und evakuiert werden. Die Wände dieser Gehäuse sind aus Gründen der Vakuumdichtigkeit und Stabilität aus Metall gefertigt. Eine derartige Anordnung hat den Nachteil, dass im Bereich großer Durchbrüche, z.B. der Türöffnung, durch die metallischen Wärmebrücken sehr hohe Wärmeströme entstehen, die die Energieeffizienz verringern.

Der vorliegenden Erfindung liegt somit die Aufgabe zugrunde, einen Vakuumdämmkörper bereitzustellen, der vergleichsweise einfach herzustellen ist und der eine geringe Gasdurchlässigkeit und somit eine höhere Lebensdauer aufweist.

Diese Aufgabe wird durch einen Vakuumdämmkörper mit den Merkmal des Anspruchs 1 gelöst.

Erfindungsgemäß ist vorgesehen, dass der Kern als eigenstabiles Gebilde ausgeführt ist und dass die Umhüllung als Barrierebeschichtung ausgeführt ist, die auf den Kern durch ein Auftragsverfahren aufgebracht ist, wobei in dem von der Barrierebeschichtung umgebenen Raum Vakuum herrscht.

Unter "Vakuum" ist jeder reduzierte Luftdruck zu verstehen. Dieser kann abhängig sein vom der Zusammensetzung und dem Aufbau des Kernmaterials, da die Wärmeleitfähigkeit des Kernmaterials direkt proportional zum darin herrschenden Luftdruck ist.

Die vorliegende Erfindung basiert somit darauf, dass ein eigenstabiler Kern bereitgestellt oder hergestellt wird, beispielsweise mittels eines gießfähigen und im ausgehärteten Zustand eigenstabilen Materials. So können vergleichsweise einfach komplexe Formen, wie Gehäuse eines Kühl- und/oder Gefriergerätes oder zwei- oder dreidimensionale Gebilde hergestellt werden, die in dem Raum zwischen Innenbehälter und Außengehäuse eines Kühl- und/oder Gefriergerätes oder zwischen die Innen- und Außenseite einer Tür, eines Deckels oder eines sonstigen Verschlusselementes eingebracht werden.

Unter der Eigenschaft "eigenstabil" ist zu verstehen, dass der Kern in jeder Orientierung auch ohne Stütz- oder sonstige Hilfsmittel seine Form behält und nicht etwa fließt, sich schwerkraftbedingt verformt etc. Unter "eigenstabil" ist alternativ oder zusätzlich zu verstehen, dass die Struktur und die Form des Kerns durch die Kräfte/Belastungen, die durch die Kühl- und/oder Gefrierstruktur aufgebracht werden, nicht zerstört wird.

Diese Eigenstabilität macht es möglich, den Kern bzw. das diesen bildende Kernmaterial durch ein Auftragsverfahren mit einer Barrierebeschichtung zu beschichten. Dadurch wird der Prozess der fehleranfälligen und komplizierten Umhüllung mit einer Barrierefolie umgangen. Durch den Beschichtungsprozess entfällt auch das Erfordernis von Siegelnähten, was die Gasundurchlässigkeit verbessert.

Ein weiterer Vorteil gegenüber VIPs besteht darin, dass durch die Möglichkeit der Herstellung komplexer Formen wesentlich weniger Vakuumkörper in einem Kühl- und/oder Gefriergerät eingebaut werden, als bei der Verwendung von plattenartigen, zweidimensionalen VIPs. Dadurch sinkt die Wahrscheinlichkeit eines Versagens sowie auch der kostenmäßige Aufwand für Dichtigkeitsprüfungen. Abgesehen davon kann die Qualität von Dichtigkeitsprüfungen erhöht werden, da weniger Vakuumkörper den Prüfvorgang durchlaufen müssen.

Vorzugsweise besteht das den Kern bildende eigenstabile Material, d.h. das Kernmaterial aus einem offenporigen und/oder offenzelligen Material oder weist ein solches Material auf. Es weist vorzugsweise eine relativ feine Porenstruktur (Nanoporigkeit) auf, eine niedrige Matrixleitfähigkeit, eine gute Evakuierbarkeit, eine gute Verarbeitbarkeit und/oder einen geringen Halbwertsdruck.

Das Kernmaterial kann aus einem Schaumstoff und/oder aus einem porösen Material und/oder aus einer Kombination von verschiedenen Materialien bestehen oder diese(n) umfassen. In Betracht kommen beispielsweise ein offenzelliger Polyurethanschaumstoff, Hartschaumstoff, Aerogel oder Xerogel oder eine Kombination dieser Materialien.

Die Form des Kernmaterials kann zwei- oder dreidimensional sein. Denkbar sind Platten oder vergleichsweise einfache Geometrien sowie auch 3D-Geometrien, wie kistenförmige Gebilde.

Insbesondere während des Herstellprozesses des Kernmaterials, bei dem es sich vorzugsweise um ein Gießverfahren handelt, können Einbauten in das Kernmaterial integriert werden.

Allerdings können Einbauten nicht nur während des Gießprozesses integriert werden, auch andere Methoden sind denkbar und von der Erfindung umfasst. Einbauten können beispielsweise nachträglich ein- oder angebracht werden. Beispielsweise können durch das Einbringen von Schnittstellen während des Gießprozesses Anbauteile bzw. Einbauten nachträglich angebracht werden.

Beispiele sind:
- Evakuierungskomponenten, d.h. Komponenten, durch die die Evakuierung des Kernmaterials möglich gemacht wird oder unterstützt wird, wie z.B. Ventile oder Evakuierstutzen. Es wird insoweit auf die EP 3 048 065 A1 verwiesen, die hiermit zum Offenbarungsgehalt der vorliegenden Erfindung gemacht wird.
- Trocknungsmittel, die Komponenten bzw. Mittel umfassen, die den Druckanstieg über die Zeit im Vakuumdämmkörper vorzugsweise durch Adsorption verhindern bzw. verlangsamen. Es wird insoweit auf die EP 3 027 953 A1 oder WO 2016/082905 A1 verwiesen, die hiermit zum Offenbarungsgehalt der vorliegenden Erfindung gemacht werden.
- Schnittstellen bzw. Fixierungsmöglichkeiten, die Elemente umfassen, die die Anbindung von Vakuumdämmkörpern an andere Bauteile ermöglicht oder erleichtert. In Betracht kommt beispielsweise eine Schnittstelle zwischen dem Vakuumdämmkörper und der Deckschicht(en) von Kühl- und/oder Gefriergeräten.
- Kältetechnische Komponenten, wie z.B. Peltier-Elemente (es wird insoweit auf die DE 10 2015 006 560 A1 und DE 10 2015 006 561 A1 verwiesen, die hiermit zum Offenbarungsgehalt der vorliegenden Erfindung gemacht werden.), Wärmetauscherkomponenten, elektrische Leitungen oder Datenleitungen, Durchführungen für Verbindungselemente (es wird insoweit auf die WO 2016/120 009 A1 und DE 10 2015 006 558 A1 verwiesen, die hiermit zum Offenbarungsgehalt der vorliegenden Erfindung gemacht werden.).

All die vorgenannten Elemente oder Kombinationen von diesen, die hier nur beispielhaft aufgezählt sind, können in den Kern ein- oder angegossen werden. Dies gilt auch für weitere mögliche Elemente oder Kombinationen von diesen. Somit wird der spätere Evakuierungsprozess sowie der Zusammenbau wesentlich vereinfacht.

Die Barrierebeschichtung dient als Barriere für die im Umgebungsfluid enthaltenen Gase und Stoffe.

In einer bevorzugten Ausführungsform wird unter einer Barrierebeschichtung im Sinne der vorliegenden Erfindung eine Beschichtung verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Barrierebeschichtung kleiner 10⁻⁵ mbar * l / s *m² und besonders bevorzugt kleiner als 10⁻⁶ mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugsweise im Bereich von kleiner 10⁻² mbar* l / s *m² und besonders bevorzugt im Bereich von kleiner 10⁻³ mbar * l / s *m² (gemessen nach ASTM F-1249-90). Vorzugsweise werden durch diese geringen Gasdurchgangsraten die vorgenannten geringen Anstiege der Wärmeleitfähigkeit erreicht.

Bei den oben genannten Werten handelt es sich um exemplarische, bevorzugte Angaben, die die Erfindung nicht beschränken.

In einer weiteren Ausgestaltung der Erfindung ist vorgesehen, dass die Barrierebeschichtung eine oder mehrere Komponenten (aktiv oder passiv) aufweist oder einschließt oder umschließt, insbesondere Ventile und/oder Stutzen und/oder sonstige Komponenten. Denkbar ist es, dass die erfindungsgemäße Barrierebeschichtung eine Baugruppe, wie z.B. ein Ventil, ein Peltierelement umschließt.

Die Barrierebeschichtung umschließt den Kern vorzugsweise an allen Seiten gasdicht, d.h. gemäß der o.g. Eigenschaften einer Barrierebeschichtung. Der durch die Barrierebeschichtung begrenzte Raum ist evakuierbar.

Vorzugsweise ist die Barrierebeschichtung mehrschichtig. Dabei ist darauf hinzuweisen, dass nicht jede der Schichten gasdichte Eigenschaften aufweisen muss. Denkbar ist es, dass die Barrierebeschichtung eine oder mehrere Barriereschichten aufweist, die vorzugsweise die o.g. Eigenschaften der Barrierebeschichtung aufweisen.

Die Schichten können organisch oder anorganisch sein und beispielsweise durch ein oder mehrere Auftragsverfahren, wie z.B. durch einen Sputter-, Lackierungs-, Bedampfungs-, CVD, insbesondere PECVD- und/oder Flash-Evaporation-Schritt aufgebracht werden. Dabei für den Auftrag unterschiedlicher Schichten dasselbe oder auch unterschiedliche Verfahren angewandt werden.

Die Schichten können eine Planierschicht und/oder eine Barriereschicht und/oder eine Abschlussschicht und/oder eine Zwischenschicht umfassen.

Die Planierschicht kann eine Schicht zum Ausgleich von Oberflächenunebenheiten des Kernmaterials sein. Es kann sich dabei um eine Lackschicht handeln.

Die Barriereschicht weist vorzugsweise eine geringe Permeationsrate gegenüber Sauerstoff, Stickstoff und Wasserstoff auf.

Die Abschlussschicht stellt eine Schutzschicht für die Beschichtung gegenüber äußeren Einflüssen bzw. Umwelteinflüssen dar.

Die Zwischenschicht kann so ausgeführt sein, dass Diffusionswege wischen Oberflächenfehlern in angrenzenden Schichten verlängert werden. Dadurch kann der Druckanstieg im Vakuumdämmkörper über einen bestimmten Zeitraum hinausgezögert werden. Die Zwischenschicht kann die Haftung zwischen den angrenzenden Schichten vergrößern, wie etwa zwischen zwei Barriereschichten.

Neben der Verlängerung der Diffusionswege hat die Zwischenschicht auch die Funktion, Fehler in der Barrierebeschichtung auszugleichen. Derartige Fehler können somit durch das Aufbringen der Zwischenschicht ausgeglichen werden. Dadurch werden diese nicht in die nächste Barriereschicht weitertransportiert, was wiederum die Barriere-Eigenschaften verbessert.

Denkbare Schichtabfolgen sind ausgehend von dem Kern, d.h. von innen nach außen:
Planierschicht, Barriereschicht, Abschlussschicht
   oder
Planierschicht, Barriereschicht, Zwischenschicht, Barriereschicht, Abschlussschicht
   oder
Planierschicht, Barriereschicht, Zwischenschicht, Barriereschicht, Zwischenschicht, Abschlussschicht,
   etc.

Die Zwischenschicht kann zwischen zwei Barriereschichten angeordnet sein oder an eine Barriereschicht angrenzen.

Der Schichtaufbau zwischen Barriereschicht(en) und Zwischenschicht(en) kann n-mal beliebig wiederholt werden.

Grundsätzlich ist auch ein Aufbau der Barrierebeschichtung ohne Zwischenschicht denkbar und von der Erfindung umfasst.

Die Planierschicht grenzt vorzugsweise unmittelbar an das Kernmaterial an. Sie dient zur Begradigung der Oberfläche des beispielsweise als 3D-Form ausgebildeten Körpers und erhöht vorzugsweise die Haftung zwischen der Barrierebeschichtung und der Oberfläche, d.h. dient als Haftvermittler. Dadurch werden Fehlstellen in der Barriereschicht minimiert, was die Permeationsrate verringert.

Die Abschlussschicht stellt vorzugsweise die äußerste Schicht des Vakuumdämmkörpers dar.

In einem Ausführungsbeispiel ist die Barrierebeschichtung UV-aushärtbar, was einen automatisierten Prozess stark beschleunigen würde.

Die Barrierefunktion kann verbessert werden, beispielsweise durch Additive und/oder plattenartige Partikel zur Verlängerung der Diffusionswege, was zu einem Absinken der Permeationsrate führt. Dies senkt die Anforderungen an die Barriereschichten und hat daher einen positiven Einfluss auf den Herstellungsprozess.

Die Barriereschicht soll eine geringe Gasdurchlässigkeit und eine geringe Wasserdampfdurchlässigkeit der Barrierebeschichtung sicherstellen. Die Barriereschicht kann beispielsweise aus Aluminium, Aluminiumoxid, Zinnoxid, Indium-Zinn-Oxid, Silizium, Siliziumoxid, Zink-Zinn-Oxid, Titan-Oxid oder einer Kombination dieser Stoffe bestehen oder diese aufweisen. Vorzugsweise werden in Barriereschichten Stoffe eingesetzt, die der Barriereschicht eine geringe Permeationsrate, insbesondere im Bereich der Gasdurchlässigkeit und Wasserdampfdurchlässigkeit verleihen.

Der Schichtaufbau der Barriereschicht(en) kann mit oder ohne Zwischenschichten erfolgen.

Die Zwischenschichten können beispielsweise aus anorganischen oder organischen Polymeren oder anorganisch-organischen Hybridpolymeren (z.B. aus Ormocer), Schichtsilikaten, Schichtsilikat-Polymer-Nanokompositen, SiOx-Schichten, Polymer-Barriereschichten oder Acrylatpolymeren oder einer Kombination dieser Stoffe bestehen oder diese aufweisen.

Die Abschlussschicht kann aus einem glasartigen Material, anorganischen Polymeren, organischen Polymeren oder anorganisch-organischen Hybridpolymeren oder einer Kombination dieser Stoffe bestehen oder diese aufweisen. Die Abschlussschicht kann Schnittstelleneigenschaften für mögliche Anbauten aufweisen, wie z.B. Verklebefunktionen, hohe Oberflächenenergie oder bestimmte mechanische Eigenschaften.

Vorzugsweise ist vorgesehen, dass die Planierungsschicht, die Siegelschicht, d.h. die Abschlussschicht und die Zwischenschichten (sofern vorhanden) die meisten der auftretenden Kräfte aufnehmen. Diese Kräfte können beispielsweise auftretende Kräfte während des Herstellprozesses sein, sowie auch Belastungskräfte durch eine spätere Benutzung oder durch Belastungen welche durch die Gesamtstruktur des Kühl- und/oder Gefriergerätes eingebracht werden. Solche Kräfte können auch durch an- und/oder eingegossene Einbauten entstehen.

Die vorliegende Erfindung betrifft des Weiteren ein Verfahren zur Herstellung eines Vakuumdämmkörpers nach einem der Ansprüche 1 bis 13, wobei zunächst ein Kern aus einem eigenstabilen Kernmaterial hergestellt oder bereitgestellt wird, dass sodann durch ein Auftragsverfahren eine Barrierebeschichtung auf das Kernmaterial aufgetragen wird und dass im Anschluss daran in dem von der Barrierebeschichtung umgebenen Bereich Vakuum erzeugt wird.

Vorzugsweise ist die Barrierebeschichtung mehrschichtig und wird in mehreren Beschichtungsvorgängen aufgebracht.

Die vorliegende Erfindung betrifft des Weiteren ein temperiertes Behältnis, insbesondere Kühl- und/oder Gefriergerät mit einem temperierten Innenraum und mit einem Verschlusselement zum Verschließen des temperierten Innenraums, wobei Behältnis zum Zwecke der Wärmedämmung einen Vakuumdämmkörper nach einem der Ansprüche 1 bis 13 aufweist. Es kann sich um ein Kühl- und/oder Gefriergerät handeln oder auch um ein Gerät, in dessen Innenraum gegenüber der Raumtemperatur erhöhte Temperaturen herrschen, wie z.B. um einen Wärmeschrank.

Der Vakuumdämmkörper kann beispielsweise kastenförmig ausgeführt sein und den Innenbehälter abgesehen von dessen offener Seite umgeben. Er kann auch plattenförmig ausgeführt sein und in mehrfacher Anzahl vorhanden sein, wobei die mehreren Vakuumdämmkörper den Innenbehälter an mehreren Seiten umgeben.

Der Vakuumdämmkörper kann auch zwischen der Innen- und Außenseite eines Verschlusselementes, wie z.B. einer Tür, einer Klappe etc. eines Kühl- und/oder Gefriergerätes oder sonstigen temperierten Behältnisses angeordnet sein.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente umfassen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert.

Es zeigen:
- Figur 1:: eine perspektivische Ansicht eines Vakuumdämmkörpers gemäß der Erfindung,
- Figur 2:: eine Frontansicht auf die Anordnung gemäß Figur 1,
- Figur 3:: eine Schnittansicht gemäß der Linie A-A in Figur 2,
- Figur 4:: eine Detailansicht des Details D in Figur 3 und
- Figur 5:: eine Detailansicht des Details E in Figur 3.

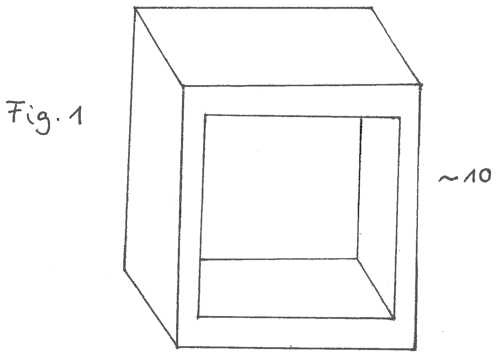

Figur 1 zeigt in einer perspektivischen Ansicht einen Vakuumdämmkörper 10 gemäß der vorliegenden Erfindung.

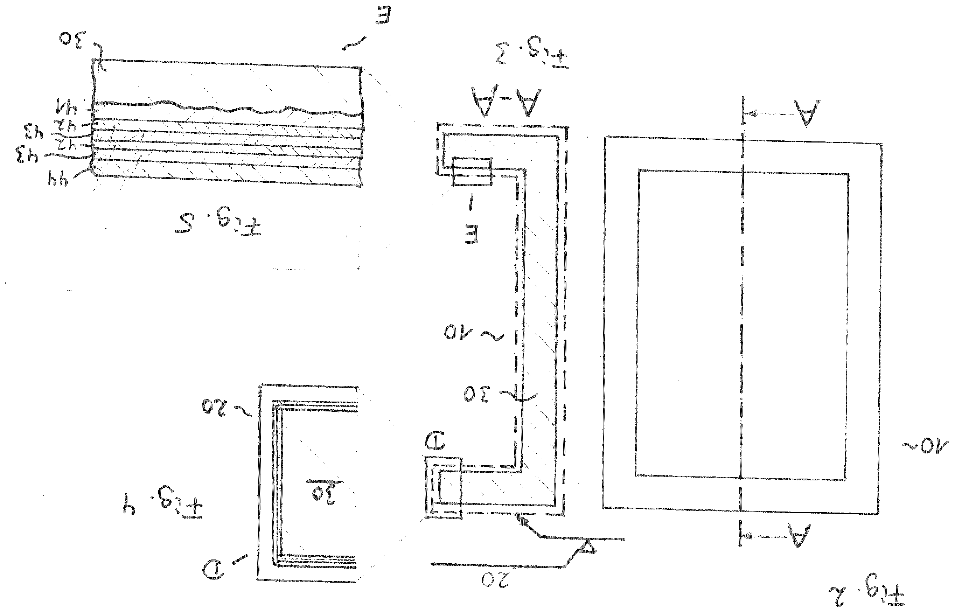

Der Vakuumdämmkörper weist die Form eines einseitig offenen Kastens auf, wie dies aus der Frontansicht gemäß Figur 2 und der Schnittansicht gemäß Figur 3 hervorgeht.

Figur 3 zeigt mit dem Bezugszeichen 20 die Barrierebeschichtung, die durch eines der o.g. Verfahren, z.B. durch CVD oder einen sonstigen Bedampfungsprozess auf den Kern 30 aufgetragen ist. Im Unterschied zum Stand der Technik wird das Kernmaterial somit nicht in einem Beutel aus Barrierefolie eingebracht, sondern durch einen oder mehrere Beschichtungsprozesse mit einer Barrierebeschichtung 20 beschichtet. Dies erlaubt die Herstellung komplexer Geometrien und vermeidet Nachteile, wie etwa das Vorhandensein von Siegelnähten, die beim Versiegeln von beutelförmigen Barrierefolien auftreten.

Figur 4 zeigt vergrößert das Detail D in Figur 3 und verdeutlicht, dass in dem hier gezeigten Ausführungsbeispiel die Barrierebeschichtung mehrschichtig ist.

Dies ergibt sich insbesondere auch aus Figur 5, die das Detail E in Figur 3 zeigt.

An die Außenseite des unebenen Kernmaterials schließt sich die Planierschicht 41 an, die die Unebenheiten des Kernmaterials ausgleicht und auf ihrer Außenseite eben ist.

An die Planierschicht schließt sich eine Barriereschicht 42 an, die eine Barriere gegen den Eintritt von Gasen durch die Barrierebeschichtung hindurch darstellt. Bei der Barriereschicht kann es sich beispielsweise um eine Metallschicht, wie z.B. eine Aluminium-Schicht handeln. Auf die Barriereschicht folgt eine Zwischenschicht 43. Dies kann beispielsweise aus einem oder mehreren Polymeren bestehen. Dieser Aufbau aus Barriereschicht und Zwischenschicht wiederholt sich noch einmal, kann aber auch öfter als zweimal vorliegen. Auf die äußere Lage der Zwischenschicht folgt die Abschlussschicht, die den Schutz gegen mechanische Beschädigungen bildet und die beispielsweise aus einem glasartigen Material besteht.

## Patentansprüche

1. Vakuumdämmkörper umfassend einen Kern und eine den Kern umgebende Umhüllung, **dadurch gekennzeichnet, dass** der Kern als eigenstabiles Gebilde ausgeführt ist und dass die Umhüllung als Barrierebeschichtung ausgeführt ist, die auf den Kern durch ein Auftragsverfahren aufgebracht ist, wobei in dem von der Barrierebeschichtung umgebenen Raum Vakuum herrscht.

2. Vakuumdämmkörper nach Anspruch 1, **dadurch gekennzeichnet, dass** das Kernmaterial aus einem offenporigen und/oder offenzelligen Material besteht oder ein solches Material umfasst.

3. Vakuumdämmkörper nach Anspruch 1 oder 2, **dadurch gekennzeichnet, dass** das Kernmaterial aus einem Schaumstoff und/oder aus einem porösen Material und/oder aus einer Kombination von verschiedenen Materialien besteht oder diese(n) umfasst, insbesondere aus einem offenzelligen Polyurethanschaumstoff, Hartschaumstoff, Aerogel oder Xerogel.

4. Vakuumdämmkörper nach einem der vorhergehenden Ansprüche, **dadurch gekennzeichnet, dass** an das Kernmaterial eine oder mehrere Komponenten ein- oder angegossen sind, insbesondere Ventil, Stutzen, Trocknungsmittel, Fixierungselemente, kältetechnische Komponenten und/oder elektrische oder Datenleitungen.

5. Vakuumdämmkörper nach einem der vorhergehenden Ansprüche, **dadurch gekennzeichnet, dass** die Barrierebeschichtung eine oder mehrere Komponenten aufweist oder einschließt oder umschließt, insbesondere Ventile und/oder Stutzen.

6. Vakuumdämmkörper nach einem der vorhergehenden Ansprüche, **dadurch gekennzeichnet, dass** die Barrierebeschichtung mehrschichtig ist.

7. Vakuumdämmkörper nach Anspruch 6, **dadurch gekennzeichnet, dass** die mehreren Schichten eine Planierschicht und/oder eine Barriereschicht und/oder eine Abschlussschicht und/oder eine Zwischenschicht umfassen.

8. Vakuumdämmkörper nach Anspruch 7, **dadurch gekennzeichnet, dass** die Planierschicht unmittelbar an das Kernmaterial angrenzt und/oder dass die Abschlussschicht die äußerste Schicht des Vakuumdämmkörpers bildet und/oder dass die Zwischenschicht zwischen zwei Barriereschichten angeordnet ist.

9. Vakuumdämmkörper nach einem der vorhergehenden Ansprüche, **dadurch gekennzeichnet, dass** die Barrierebeschichtung UV-aushärtbar ist und/oder dass die Barrierebeschichtung Additive und/oder plattenartige Partikel zur Verlängerung der Diffusionswege.

10. Vakuumdämmkörper nach einem der vorhergehenden Ansprüche, **dadurch gekennzeichnet, dass** die Barrierebeschichtung durch einen Sputter-, Lackierungs-, Bedampfungs-, CVD, insbesondere PECVD- und/oder Flash-Evaporation-Schritt aufgebracht ist.

11. Vakuumdämmkörper nach einem der vorhergehenden Ansprüche, **dadurch gekennzeichnet, dass** die Barrierebeschichtung eine Barriereschicht aufweist, die aus Aluminium, Aluminiumoxid, Zinnoxid, Indium-Zinn-Oxid, Silizium, Siliziumoxid, Zink-Zinn-Oxid, Titan-Oxid oder einer Kombination dieser Stoffe besteht oder diese aufweist und/oder dass die Barrierebeschichtung eine Zwischenschicht aufweist, die vorzugsweise an eine Barriereschicht angrenzt und die aus anorganischen oder organischen Polymeren oder anorganisch-organischen Hybridpolymeren, Schichtsilikaten, Schichtsilikat-Polymer-Nanokompositen, SiOx-Schichten, Polymer-Barriereschichten oder Acrylatpolymeren oder einer Kombination dieser Stoffe besteht oder diese aufweist.

12. Vakuumdämmkörper nach einem der vorhergehenden Ansprüche, **dadurch gekennzeichnet, dass** die Barrierebeschichtung eine Abschlussschicht aufweist, die aus einem glasartigen Material, anorganischen Polymeren, organischen Polymeren oder anorganisch-organischen Hybridpolymeren oder einer Kombination dieser Stoffe besteht oder diese aufweist.

13. Vakuumdämmkörper, **dadurch gekennzeichnet, dass** der Kern zwei- oder dreidimensional, insbesondere kistenartig ausgebildet ist.

14. Verfahren zur Herstellung eines Vakuumdämmkörpers nach einem der Ansprüche 1 bis 13, **dadurch gekennzeichnet, dass** zunächst ein Kern aus einem Kernmaterial hergestellt oder bereitgestellt wird, dass sodann durch ein Auftragsverfahren eine Barrierebeschichtung auf das Kernmaterial aufgetragen wird und dass im Anschluss daran in dem von der Barrierebeschichtung umgebenen Bereich Vakuum erzeugt wird.

15. Verfahren nach Anspruch 14, **dadurch gekennzeichnet, dass** die Barrierebeschichtung mehrschichtig ist und dass die Barrierebeschichtung in mehreren Beschichtungsvorgängen aufgebracht wird.

16. Verfahren nach Anspruch 14 oder 15, **dadurch gekennzeichnet, dass** der Kern durch einen Gießvorgang hergestellt wird.

17. Temperiertes Behältnis, insbesondere Kühl- und/oder Gefriergerät mit einem temperierten Innenraum und mit einem Verschlusselement zum Verschließen des temperierten Innenraums, **dadurch gekennzeichnet, dass** das Behältnis zum Zwecke der Wärmedämmung einen Vakummdämmkörper nach einem der Ansprüche 1 bis 13 aufweist.
